# EUROPÄISCHE PATENTSCHRIFT

(11) **EP 1 102 962 B1**
(45) Veröffentlichungstag und Bekanntmachung des Hinweises auf die Patenterteilung: **10.08.2005**
(21) Anmeldenummer: 00936852.3
(22) Anmeldetag: 02.06.2000
(51) Int. Cl.: G01B 11/06, G01N 21/35

(54) **VORRICHTUNG ZUR BESTIMMUNG DER DICKE UND WACHSTUMSGESCHWINDIGKEIT EINER EISSCHICHT**
DEVICE FOR DETERMINING THE THICKNESS AND FORMATION RATE OF A LAYER OF ICE
DISPOSITIF POUR DETERMINER L'EPAISSEUR ET LA VITESSE DE FORMATION D'UNE COUCHE DE GLACE

(30) Priorität: 07.06.1999 DE 19927015
(43) Veröffentlichungstag der Anmeldung: 30.05.2001
(73) Patentinhaber: CARL ZEISS JENA GmbH, 07745 Jena (DE)
(72) Erfinder: FRITSCH, Manfred, D-07751 Kleinpürschütz (DE); KERSTAN, Felix, D-07747 Jena (DE); CORRENS, Nico, D-99425 Weimar (DE)
(74) Vertreter: Niestroy, Manfred
(86) Internationale Anmeldenummer: PCT/EP2000/005040
(87) Internationale Veröffentlichungsnummer: WO 2000/075606

(56) Entgegenhaltungen:
- EP-A- 0 898 148
- WO-A-96/26430
- US-A- 4 808 824

## Beschreibung

***Die Erfindung betrifft eine Vorrichtung zur Bestimmung der Dicke und Wachstumsgeschwindigkeit einer Eisschicht auf Bauteilen von Verkehrsmitteln, insbesondere Luftfahr-zeugen, und auf Bauteilen von Windkraftwerken, bei der die zu überwachende, mit einer Eis- und*****/*****oder Störschicht bedeckte Oberfläche eines Bauteiles so beleuchtet wird, daß die durch die Eis- und*****/*****oder Störschicht hindurchgehende Strahlung in unterschiedlichen Wellenlängenbereichen gemessen und ausgewertet wird, die auf die Oberfläche fallende Strahlung durch ein mit einem Zeilenempfänger verbundenes holographisches Gitter*** ***in so viele Wellenlängenbereiche zerlegt wird, daß durch Vergleich der gemessenen Strahlung mit einer gespeicherten Reflektionskurve einer Oberfläche ohne Belag und durch Verknüpfung der Vergleichswerte sowie der Bestimmung der Peakfläche im Wellenlängenbereich der Eisabsorption ein Meßsignal für die Eisabsorption erhalten wird, wobei die Peakfläche durch die Summe der Absorptionswerte in dem vom Eis beeinflußten Bereich der Oberfläche gegeben ist, und die Dicke der Eis- und*****/*****oder Störschicht und mittels der in Meßintervallen erhaltenen Eisdickenwerte die Wachstumsgeschwindigkeit der Eisschicht ezmittelt und angezeigt wird.***

Aus dem Stand der Technik sind Verfahren und Vorrichtungen zur Durchführung der Verfahren bekannt, die sowohl den Oberflächenzustand von Verkehrswegen hinsichtlich überfrierender Nässe, Vereisung und vorhandener Enteisungsmittel messen, als auch eine entstehende Eis- und Reifbildung an festen Flächen, wie den Straßenbelägen erkennen, um bei unvorhergesehenen Wettersituationen die Straßenverhältnisse für die Verkehrsteilnehmer bekanntzugeben. Nicht nur im Straßenverkehr bedingen Vereisungen der Fahrbahnen und plötzlich auftretende Glatteisbildung Gefahren, auch im Schienenverkehr und in der Luftfahrt entsteht durch vereiste Bauteile infolge gefrierenden Wassers eine Gefährdung. So führen vereiste Bauteile an Luftfahrzeugen, insbesondere an gegeneinander beweglichen Bauteilen im Tragflächenbereich zu einer Behinderung im Luftverkehr sowie zu einer erheblichen Gefährdung der Flugsicherheit und anderseits kann ein geringer Eisansatz an gefährdeten Bauteilen von Luftfahrzeugen schon zu einer drastischen Veränderung der Profileigenschaften der verwendeten Bauteile führen. Durch moderne Navigationssysteme, wie beispielsweise Radarführung oder Ortungssysteme können zwar immer mehr Flüge unter widrigsten Wetterbedingungen durchgeführt werden, aber damit steigt auch die potentielle Gefahr der Vereisung von Luftfahrzeugen. Insbesondere kleinere Flugzeuge ohne oder mit nur einfachen Enteisungssystemen fliegen immer häufiger unter Wetterbedingungen, die eine Vereisung begünstigen. Tritt beispielsweise eine Vereisung des Luftfahrzeuges am Boden auf, muß der Pilot entscheiden, ob die Vereisung noch zulässig ist oder die Eisschicht vor dem Start entfernt werden muß. Entscheidend für die allgemeine Flugsicherheit ist somit die Bestimmung der Vereisung hinsichtlich, der Dicke, bzw. der positiven oder negativen Wachstumsgeschwindigkeit einer Eisschicht als ein wichtiges Kriterium zur Beurteilung der potentiellen Gefahr, die von einer sich bildenden und sich verändernden Eisschicht ausgeht. Auch für einen optimalen Einsatz von Enteisungsmitteln ist die Eisschichtdicke von Bedeutung.

Aus der WO 96/26430 ist ein Verfahren zum Feststellen des Oberflächenzustandes von Verkehrswegen und eine Vorrichtung zur Durchführung des Verfahrens bekannt, indem mittels spektralanalytischer Bestimmung von Wasser und Eis auf einem festen Straßenbelag in vier verschiedenen Wellenlängenbereichen durch eine Reflexionsmessung durch die Eisschicht eine Eis- und Reifbildung in Abhängigkeit von dem jeweiligen Kristallisationsgrad erkannt und die Dicke der Eisschicht auf der Oberfläche berücksichtigt werden kann. Der unterschiedliche Spektralverlauf der Absorption des trockenen Fahrbahnbelages wird jedoch bei den vorgegebenen vier Wellenlängenbereichen nicht kompensiert, so daß zwar eine Aussage..über den Oberflächenzustand getroffen werden kann, eine genaue Bestimmung der Dicke der Eisschicht aber nicht durchführbar ist.

Aus der DE 195 06 550 ist ein weiteres Verfahren zur spektrometrischen Bestimmung von Wasser und Eis auf Straßen und eine Anordnung zur Durchführung des Verfahrens bekannt, mit dem zwar eine Eis- und Reifbildung an festen Oberflächen in Abhängigkeit von dem jeweiligen Kristallisationsgrad festgestellt werden kann, aber keine Kompensation des Spektralverlaufs des Reflexionsvermögens der Straßenoberfläche von störenden Belägen und von fremden Lichtquellen (Tageslicht), so daß damit keine exakte Schichtdickenbestimmung der Eisschicht und deren Wachstumsgeschwindigkeit möglich ist.

***In EP-A-898 148 ist ein Verfahren zur Bestimmung des Zustandes einer Fahrbahnoberfläche beschrieben. Dabei wird das von der Fahrbahnoberfläche rückgestreute Licht erfaßt und spektral ausgewertet. In einem bestimmten Wellenlän*** ***genbereich wird das Spektrum des rückgestreuten Lichtes mit einem Referenzspektrum verglichen und aus dem Vergleich werden Schlußfolgerungen auf die Dicke eines auf der Fahrbahnoberfläche gebildeten Wasserfilms, einer Eisschicht oder eines Schneebelags abgeleitet. Allerdings ist dieses Verfahren lediglich zum Zweck der Vermessung von Fahrbahnoberflächen geeignet.***

Ausgehend von dem eingangs bezeichneten Stand der Technik liegt der Erfindung die Aufgabe zugrunde, eine Vorrichtung zu schaffen, die kostengünstig und zuverlässig ***die Bestimmung der Dicke und Wachstumsgeschwindigkeit einer Eisschicht auf Bauteilen von Verkehrsmitteln und auf Bauteilen von Windkraftwerken*** mit geringem technischen Aufwand gestattet.

***Die Aufgabe der Erfindung wird bei einer Vorrichtung der eingangs genannten Art dadurch gelöst, daß bei Unterschreitung eines Grenzwertes des Meßsignals eine Warnung zum Reinigen eines in der mit einer Eis- und*****/*****oder Störschicht bedeckten Oberfläche vorgesehenen Fensters ausgegeben wird.***

***Damit ist*** nicht nur eine genaue Schichtdickenbestimmung einer Eisschicht sowie deren Wachstumsgeschwindigkeit vorzugsweise auf Bauteilen von Luftfahrzeugen möglich, sondern auch die Erfassung der Dicke von störenden Belägen, wie beispielsweise Wasser, Verschmutzungen und Enteisungsmitteln. Weiterhin wird durch Vergleichsberechnungen aus einer ausreichenden Anzahl von ermittelten Eisdickenwerten die positive und negative Wachstumsgeschwindigkeit einer Eisschicht ermittelt, so daß auch für kurzzeitig sich ändernde Wetterbedingungen sowie Witterungseinflüsse die Eisschichtdicke und deren Wachstumsgeschwindigkeit auf der Oberfläche von Bauteilen von Luftfahrzeugen vorausschauend bestimmbar ist.

Dadurch, daß die Dicke der Eis- und/oder Störschicht auf einer zu überwachenden Oberfläche bestimmt wird, können mit diesem Verfahrens neben der Eisdickenbestimmung auch trockene Schmutzschichten erkannt werden, so daß durch das Verfahren zusätzlich Gefahrenzustände, hervorgerufen durch Verschmutzungen von Bauteilen, ausgeschaltet werden.

Vorteilhaft ist vorgesehen, daß die ermittelten Absorptionskurven durch einen einfachen Algorithmus mittels eines Mikroprozessor der Steuer- und Auswerteeinheit auswertbar sind und damit eine schnelle und genaue Bestimmung der Eisschichtdicke und deren Wachstumsgeschwindigkeit unter Ausnutzung von in einem Luftfahrzeug vorhandenen technischen Mitteln gewährleistet ist.

Bevorzugt ist vorgesehen, daß die spektralanalytische Messung vorzugsweise in den Wellenlängenbereichen von ca. 850 bis 1150 nm vorgesehen ist, wobei das Licht in so viele Wellenlängenbereiche spektral zerlegt wird, daß die Spektralabhängigkeit von störenden Belägen, wie Wasser, Verschmutzung und Enteisungsmittel sowie von unterschiedlichen Lichtquellen, wie Tageslicht, Dämmerlicht und Glühlampen erfaßt und zur Korrektur der Eisabsorption verwendet werden kann.

Des weiteren ist bevorzugt vorgesehen, daß die Meßwerte einer Oberfläche ohne Belag als Vergleichswerte in einer Steuer- und Auswerteeinheit gespeichert sind.

Vorteilhaft ist zudem zur Erhöhung der Meßgenauigkeit vorgesehen, daß von allen Meßwerten einer mit einer Eis- und/oder Störschicht bedeckten Oberfläche die Meßwerte vom langwelligen Ende des Spektralbereiches abgezogen werden, da dort die Lichtempfindlichkeit beispielsweise einer Siliziumempfängerzeile vernachlässigbar klein ist.

Ein weiterer Vorteil wird darin gesehen, daß aus der Peakfläche, die proportional der Eisschichtdicke ist, mittels eines Umrechnungsfaktors die Eisdicke in Millimetern bestimmt wird.

Vorteilhaft ist zudem vorgesehen, daß aus einer größeren Anzahl von ermittelten Eisdickenwerten die Wachstumsgeschwindigkeit der Eisschicht bestimmt wird.

Eine besonders bevorzugte Weiterbildung wird darin gesehen, daß bei Unterschreitung eines Grenzwertes des Meßsignals trotz eingeschalteter Lichtquelle zusätzlich von der Steuer- und Auswerteeinheit eine Warnung ausgegeben wird, zum Reinigen des Fensters oder zum Auswechseln der Lichtquelle. Dadurch können weitere Fehlerquellen bei der Bestimmung der Dicke und Wachstumsgeschwindigkeit einer Eisschicht ausgeschaltet werden.

Eine bevorzugte Variante wird darin gesehen; daß die durch das Fenster in der mit einer Eis- und/oder Störschicht bedeckten Oberfläche hindurchfallende Strahlung direkt durch den Eintrittsspalt auf das holographische Gitter fällt.

Bevorzugt ist zudem vorgesehen, daß eine Lichtquelle zur Beleuchtung des in der mit einer Eis- und/oder Störschicht bedeckten Oberfläche vorgesehenen Fensters oberhalb der Oberfläche angeordnet ist.

Eine vorteilhafte Ausführungsform wird darin gesehen, daß die Lichtquelle zur Beleuchtung des in der mit einer Eis- und /oder Störschicht bedeckten Oberfläche vorgesehenen Fensters unterhalb der Oberfläche angeordnet ist.

Unter Umständen ist auch bevorzugt vorgesehen, daß zur Beleuchtung der mit einer Eis- und/oder Störschicht bedeckten Oberfläche vorgesehenen Fensters mehrere, insbesondere ringförmig in einem Grundkörper angeordnete Lichtquellen vorgesehen sind.

Ein weiterer Vorteil besteht darin, daß bei ausreichendem Tageslicht die Lichtquelle zur Beleuchtung der mit einer Eis- und/oder Störschicht bedeckten Oberfläche von der Steuer- und Auswerteeinheit nicht eingeschaltet wird.

Eine vorteilhafte Weiterbildung der Erfindung ergibt sich durch die Anordnung eines halbdurchlässigen Spiegels vor dem optischen Abbildungssystem zur genauen und gleichmäßigen Ausleuchtung der mit einer Eis- und/oder Störschicht bedeckten Oberfläche.

Eine ebenso bevorzugte Ausführungsform wird darin gesehen, daß die Auswertedaten an ein vorhandenes Datenbussystem, beispielsweise eines Luftfahrzeuges weiterleitbar sind.

Vorteilhaft wird weiterhin gesehen, daß die Vorrichtung mit Eintrittsspalt, holographischem Gitter, Zeilenempfänger und Steuer- und Auswerteeinheit als kompaktes Bauteil für einen universellen Einsatz vorgesehen ist.

Ausführungsbeispiele der Erfindung sind in der Zeichnung dargestellt und im folgenden näher beschrieben:
Es zeigt:
- Fig. 1: Prinzipdarstellung einer ersten Ausführungsform der Vorrichtung
- Fig. 2: Prinzipdarstellung einer zweiten Ausführungsform der Vorrichtung
- Fig. 3: Prinzipdarstellung einer dritten Ausführungsform der Vorrichtung
- Fig. 4: Prinzipdarstellung einer weiteren Ausführungsform der Vorrichtung
- Fig. 5: Absorptionskurven für unterschiedliche Oberflächenzustände

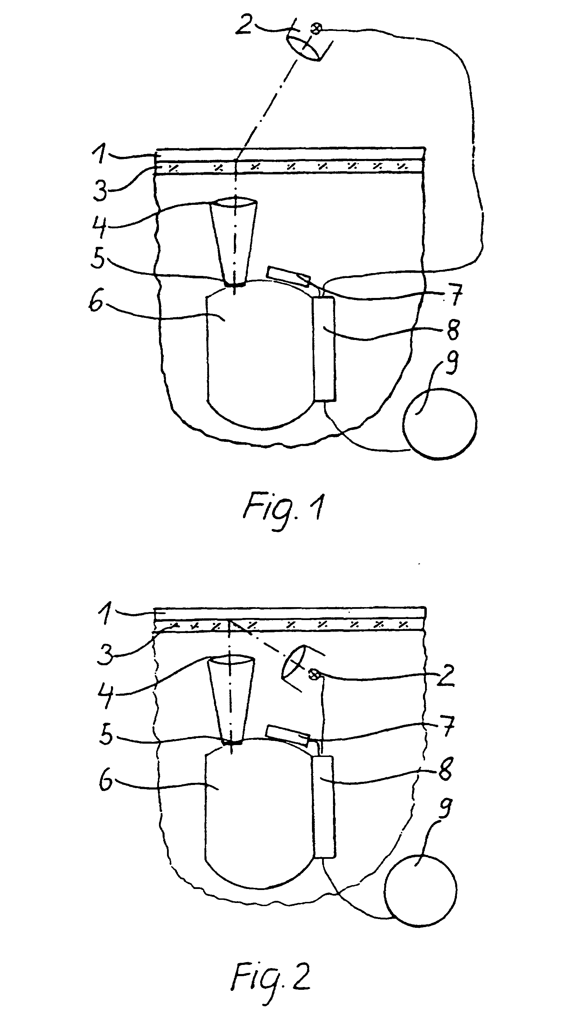

In der Ausführungsform gemäß Fig. 1 befindet sich über einer, durch überfrierende Nässe oder andere Witterungseinflüsse mit einer Eis- und/oder Störschicht 1, wie Wasser, Enteisungsmittel oder Verschmutzungen bedeckten Oberfläche eines Bauteiles, beispielsweise eines Luftfahrzeuges oder eines Windkraftwerkes eine Lichtquelle 2, die ein in der zu überwachenden, mit einer Eis- und/oder Störschicht 1 bedeckten Oberfläche des Bauteiles vorgesehenes Fenster 3 beleuchtet. Bei ausreichendem Tages-licht ist die Lichtquelle 2 nicht eingeschaltet, so daß nur das Tageslicht auf die zu überwachende, mit einer Eis- und/oder Störschicht 1 bedeckten Oberfläche fällt und von dieser und dem Fenster 3 hindurchgelassen wird. Das Licht fällt dabei über ein optisches Abbildungssystem 4 durch einen Eintrittsspalt 5 auf ein abbildendes holographisches Gitter 6, wo es nach Wellenlängen zerlegt und auf eine Siliziumdetektorzeile 7 abgebildet wird. Dabei darf kein gerichtetes reflektiertes Licht von der zu untersuchenden Oberfläche in die als Spektrometer ausgeführte Vorrichtung fallen. Das Licht, beispielsweise einer 5W-Glühlampe reicht dabei auch bei diffuser Reflektion der zu untersuchenden Oberfläche für ein ausreichendes Ausgangssignal des Spektrometers mit Siliziumdetektoren aus. Das einfallende Licht wird durch das Gitter 6 in Verbindung mit dem Zeilenempfänger 7 in mindestens so viele Wellenlängenbereiche zerlegt, daß die Spektralabhängigkeit unabhängig von störenden Belägen, beispielsweise Wasser, Enteisungsmittel, Verschmutzung, sowie von unterschiedlichen Lichtquellen, wie Tages-, Dämmerlicht und Glühlampen erfaßt und zur Korrektur der Eisabsorption verwendet werden kann. Die Meßintervalle werden dabei so kurz gewählt, daß aus einer ausreichenden Zahl der zurückliegenden Werte eine Trendanalyse für die Änderungsrate der Eis- und/oder Störschicht 1 abgeleitet werden kann.

Das abgebildete Spektrum erfaßt einen Wellenlängenbereich von ca. 900 bis 1150 nm. Beim Einsatz eines Spektrometers sollte dessen spektrale Bandbreite so gering sein, daß die Banden von Wasser und Eis sicher getrennt werden können, sollte aber nicht viel kleiner sein, um den Lichtdurchsatz nicht unnötig zu verringern und das Rauschen zu minimieren. Die spektrale Bandbreite kann beispielsweise 20nm betragen. Eine Steuer- und Auswerteeinheit 8 stellt dazu die erforderlichen Bedingungen, wie die notwendigen Betriebsspannungen und die Taktsignale zur Ansteuerung der Siliziumdetektorzeile 7 bereit und wertet die abgegebenen Spannungen aus. Bei für eine Auswertung zu geringem Tageslicht wird durch die Steuer- und Auswerteeinheit 8 die Lichtquelle 2 zugeschaltet. Wenn auch bei eingeschalteter Lichtquelle 2 das Meßsignal in dem von Belägen unbeeinflußten Spektralbereich einen Grenzwert unterschreitet, wird von der Steuer- und Auswerteinheit 8 außerdem noch eine Warnung zum Reinigen des Fensters 3 bzw. zum Wechseln der Lichtquelle 2 ausgegeben. Die Lichtquelle 2 wird zusätzlich von der Steuer- und Auswerteeinheit 8 mit einer festen Unterspannung versorgt, um die Lebensdauer zu verlängern. Die Ergebnisse der Auswertung können entweder auf einer Anzeige 9, einem Display dargestellt oder an das nicht näher dargestellte Datenbussystem eines Luftfahrzeuges weitergeleitet werden.

Fig. 2 zeigt eine zweite Ausführungsform der Vorrichtung, bei der die zu überwachende, mit einer Eis- und/oder Störschicht 1 bedeckte Oberfläche durch das Fenster 3 mittels einer in der Vorrichtung unterhalb der Oberfläche angeordneten Lichtquelle 2 bei zu geringem Tageslicht von innen beleuchtet wird, so daß das Licht der Lichtquelle 2, beispielsweise Infrarotlicht, durch ungerichtete Reflexion über das optisches Abbildungssystem 4 auf den Eintrittsspalt 5 fällt, mit dem Vorteil, daß alle Bauteile der Vorrichtung unterhalb der zu über-wachenden, mit einer Eis- und/oder Störschicht 1 bedeckten Oberfläche untergebracht werden können.

Die Steuer- und Auswerteeinheit 8 muß bei der Berechnung der Schichtdicke der Eisschicht 1 dann nur berücksichtigen, daß bei interner Beleuchtung das Licht zweimal die Eisschicht 1 durchlaufen muß.

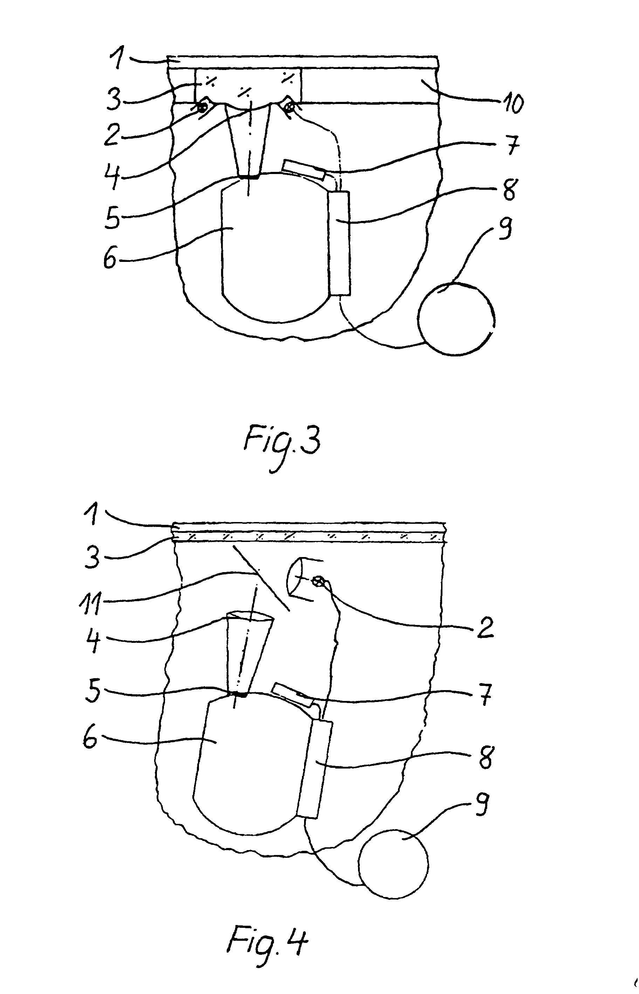

Fig. 3 zeigt eine dritte Ausführungsform der Vorrichtung, bei der mehrere Lichtquellen 2 ringförmig in einem Grundkörper 10 angeordnet sind. Das holographische Gitter 6 mit dem Eintrittsspalt 5, der Zeilenempfänger 7 und die Steuer- und Auswerteeinheit 8 sind für spezielle Einsatzgebiete als kompaktes Bauteil vorgesehen.

In Fig. 4 ist eine weitere Ausführungsform der Vorrichtung dargestellt, bei der zwischen der Lichtquelle 2 und dem optischen Abbildungssystem 4 ein halbdurchlässiger Spiegel 11 angeordnet ist, zur gleichmäßigen und genauen Ausleuchtung der mit einer Eis- und/oder Störschicht 1 bedeckten Oberfläche.

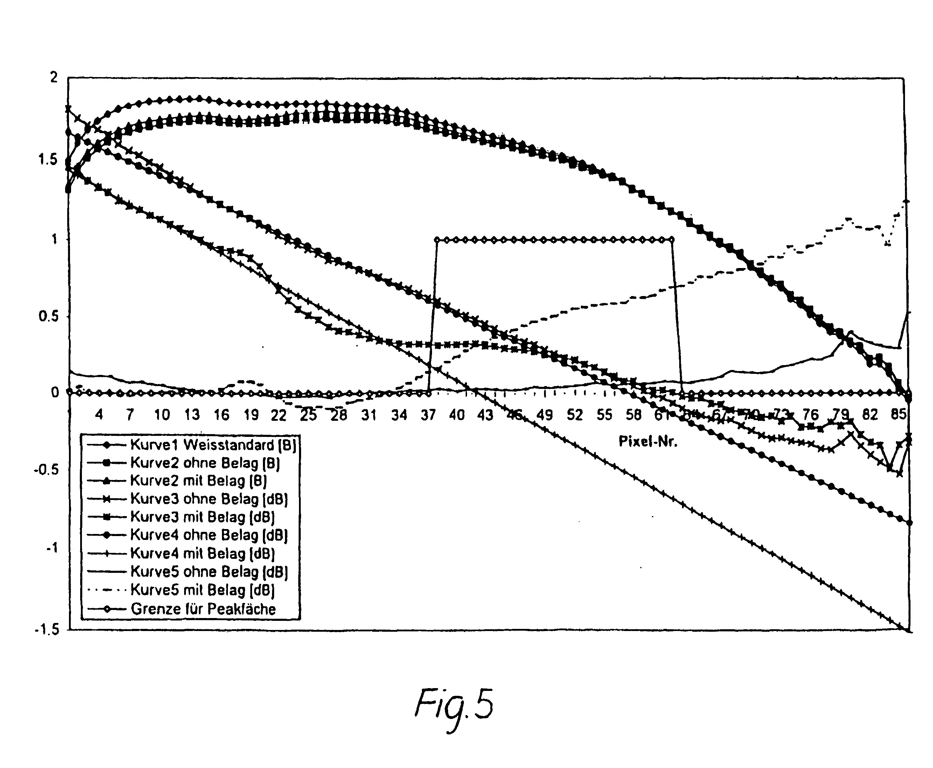

Eine spezielle Schaltung zur Auswertung der gemessenen Spektren ist nicht erforderlich. Sie wird in vorteilhafter Weise durch die in der Steuer- und Auswerteinheit 8 implementierte Software realisiert. Der Kurvenauswertealgorithmus wird anhand der in Fig. 5 dargestellten Absorptionskurven für Oberflächen mit und ohne Belag in einem Wellenlängenbereich von 850 bis 1150 nm näher beschrieben.

In Fig. 5 sind verschiedene gemessene Absorptionskurven für betrachtete Oberflächen mit und ohne Belag für einen Wellenlängenbereich von 850 bis 1150nm dargestellt. Zur Kompensation des Dunkelstromes werden von allen Meßwerten die Werte vom Ende des Spektralbereiches abgezogen, da dort die Empfindlichkeit der Siliziumempfängerzeile 7 vernachlässigbar klein ist. Weiterhin kann zur Erhöhung der Genauigkeit der von Pixel zu Pixel unterschiedliche Dunkelstromverlauf berücksichtigt werden, d.h. Meßwerte, die bei abgedunkeltem Licht ohne Lichteinfall erhalten werden. Alle so gewonnenen Meßwerte werden logarithmiert. Die Dunkelstromwerte können temperaturabhängig schwanken, da der Algorithmus eine Dunkelstromkompensation beinhaltet. Die Spannungswerte der Pixel der Siliziumempfängerzeile 7 werden dazu der Reihe nach einem Analog-DigitalUmsetzer in der Steuer- und Auswerteeinheit 8 zugeführt und sofort in Digitalwerte gewandelt und vom Mikroprozessor verarbeitet, so daß mit geringer Zeitverzögerung das Ergebnis der Eisschichtdicke und deren Wachstumsgeschwindigkeit zur Verfügung steht.

Als Ausgangskurve für die Messungen wird die Reflektionskurve 1 einer Oberfläche ohne Belag, beispielsweise Weißstandard einmalig bei seiner Herstellung aufgenommen und in der Steuer- und Auswerteeinheit 8 gespeichert, um durch Vergleich der Meßwerte der zu überwachenden, mit einer Eis- und/oder Störschicht 1 bedeckten Oberfläche mit den gespeicherten Meßwerten der Oberfläche ohne Belag eine Korrektur der Eisabsorption zu erhalten. Durch Subtraktion der Kurve 2 von der Kurve 1 entsteht die Absorptionskurve 3. Der nicht vom Eis beeinflußte Bereich der Kurve 3 wird dann linear bis unter den Peak, den Wellenlängenbereich, in dem die Eisabsorption beginnt, extrapoliert. Die in den Integrationsgrenzen der Pixel 37-61 (Weißstandard) dargestellte Peakfläche, stellt die Summe der Absorptionswerte innerhalb der Integrationsgrenzen dar und den vom Eis beeinflußten Bereich einer Oberfläche, in denen die Eisabsorption beginnt. Durch Subtraktion der Kurve 4 von der Kurve 3 entsteht dann eine von Fremdeinflüssen freie Absorptionskurve 5.

Zur Bestimmung der Eisdicke in mm wird durch die Differenz der Absorptionskurven 5 mit und ohne Belag die Peakfläche im Wellenlängenbereich der Eisabsorption ermittelt, wobei aus der Peakfläche, die proportional der Eisschichtdicke ist, über einen Umrechnungsfaktor die Eisdicke in Millimetern ermittelt wird. Aus einer Vielzahl der gemessenen Eisdickenwerte, beispielsweise 10-50 Eisdickenwerte, kann durch eine lineare Ausgleichsrechnung die Wachstumsgeschwindigkeit der Eisschicht ermittelt werden. Die Auswertung der gemessenen Absorptionskurven einer Oberfläche eines Bauteiles kann auch mittels einer Auswertematrix zusammengefaßt und mit einem Algorithmus in der Steuer- und Auswerteeinheit 8 bestimmt werden.

Die Erfindung ist nicht auf die Ausführungsbeispiele beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. *Vorrichtung* zur Bestimmung der Dicke und Wachstumsgeschwindigkeit einer Eisschicht auf Bauteilen von Verkehrsmitteln, insbesondere Luftfahrzeugen, und ***auf Bauteilen von*** Windkraftwerken **,** ***bei der***
- die zu überwachende, mit einer Eis- und/oder Störschicht bedeckte Oberfläche eines Bauteiles so beleuchtet wird, daß die durch die Eis- und/oder Störschicht hindurchgehende Strahlung in unterschiedlichen Wellenlängenbereichen gemessen und ausgewertet wird,
- die auf ***die*** Oberfläche fallende Strahlung durch ein mit einem Zeilenempfänger (7) verbundenes holographisches Gitter (6) in so viele Wellenlängenbereiche zerlegt wird, daß durch Vergleich der gemessenen Strahlung mit einer gespeicherten Reflektionskurve einer Oberfläche ohne Belag und durch Verknüpfung der Vergleichswerte sowie der Bestimmung der Peakfläche im Wellenlängenbereich der Eisabsorption ***ein Meßsignal für die*** Eisabsorption erhalten wird, ***wobei die Peakfläche durch die Summe der Absorptionswerte in dem vom Eis beeinflußten Bereich der Oberfläche gegeben ist, und***
- die Dicke der Eis- und/oder Störschicht (1) und mittels der in Meßintervallen erhaltenen Eisdickenwerte die Wachstumsgeschwindigkeit der Eisschicht (1) ermittelt und angezeigt wird,
***dadurch gekennzeichnet, daß***
- bei Unterschreitung eines Grenzwertes des Meßsignals eine Warnung zum Reinigen eines in der mit einer Eis- und/oder Störschicht (1) bedeckten Oberfläche vorgesehenen Fensters (3) ausgegeben wird.

2. Vorrichtung nach Anspruch *1*, **dadurch gekennzeichnet, daß** die durch das Fenster (3) hindurchfallende Strahlung
- ***über ein optisches Abbildungssystem (4) und einen Eintrittsspalt (5) oder***
- direkt durch ***einen*** Eintrittsspalt (5) auf das holograpische Gitter (6) fällt.

3. Vorrichtung nach Anspruch *2*, **dadurch gekennzeichnet, daß** die durch das Fenster (3) hindurchfallende Strahlung
- ***über ein optisches Abbildungssystem (4) und einen Eintrittsspalt (5) auf das holograpische Gitter (6) fällt und vor dem optischen Abbildungssystem (4) ein halbdurchlässiger Spiegel (10) angeordnet ist.***

4. Vorrichtung nach einem der ***vorgenannten Ansprüche*****, dadurch gekennzeichnet, daß** eine Lichtquelle (2) zur ***Erzeugung der Strahlung*** **ober**-halb der mit einer Eis- und/oder Störschicht (1) bedeckten Oberfläche angeordnet ist.

5. Vorrichtung nach einem der ***vorgenannten Ansprüche*****, da** **durch gekennzeichnet, daß** ***eine*** Lichtquelle (2) zur ***Erzeugung der Strahlung*** unterhalb der mit einer Eis- und/oder Störschicht (1) bedeckten Oberfläche angeordnet ist.

6. Vorrichtung nach einem der ***vorgenannten Ansprüche***, **dadurch gekennzeichnet, daß** zur ***Erzeugung der Strahlung*** mehrere, insbesondere ringförmig in einem Grundkörper (10) angeordnete Lichtquellen (2) vorgesehen sind.

7. Vorrichtung nach einem der *vorgenannten **Ansprüche,*** **dadurch gekennzeichnet, daß** bei ausreichendem Tageslicht ***dieses als Strahlung genutzt und*** die Lichtquelle (2) nicht eingeschaltet wird.

8. Vorrichtung nach einem der *vorgenannten **Ansprüche*****, dadurch gekennzeichnet, daß** die Auswertedaten an ein vorhandenes Datenbussystem weiterleitbar sind.

9. Vorrichtung nach einem der *vorgenannten Ansprüche*, **dadurch gekennzeichnet, daß** die Vorrichtung mit dem optischen Abbildungssystem (4), dem Eintrittsspalt (5), dem holographischen Gitter (6), dem Zeilenempfänger (7) und der Auswerteeinheit (8) als kompaktes Bauteil ausgebildet ist.

10. Vorrichtung nach einem der ***vorgenannten Ansprüche*****, dadurch gekennzeichnet, daß** die ermittelten Absorptionskurven durch einen Algorithmus mittels eines Mikroprozessors einer Steuer- und Auswerteeinheit (8) auswertbar sind.

11. Vorrichtung nach einem der ***vorgenannten Ausprüche*****, dadurch gekennzeichnet, daß** die spektralanalytische Messung vorzugsweise in den Wellenlängenbereichen von ca. 850 bis 1150 nm erfolgt.

12. Vorrichtung nach einem der ***vorgenannten Ansprüche,*** **dadurch gekennzeichnet, daß** die Meßwerte einer Oberfläche ohne Belag als Vergleichswerte in der Steuer- und Auswerteeinheit (8) gespeichert sind.

13. Vorrichtung nach einem der ***vorgenannten Ansprüche*****, dadurch gekennzeichnet, daß** von den allen Meßwerten einer mit einer Eis- und/oder Störschicht bedeckten Oberfläche die Meßwerte vom langwelligen Ende eines Spektralbereiches unberücksichtigt sind.

14. Vorrichtung nach einem der ***vorgenannten Ansprüche*****, dadurch gekennzeichnet, daß** aus der Peakfläche, die proportional der Eisschichtdicke ist, mittels eines Umrechnungsfaktors die Eisdicke in Millimetern bestimmt wird.

15. Vorrichtung nach einem der ***vorgenannten Ansprüche,*** **dadurch gekennzeichnet, daß** aus einer größeren Anzahl von ermittelten Eisdickenwerten die Wachstumsgeschwindigkeit der Eisschicht bestimmt wird.

16. Vorrichtung nach einem der ***vorgenannten Ansprüche,*** **dadurch gekennzeichnet, daß** bei Unterschreitung eines Grenzwertes des Meßsignals trotz eingeschalteter Lichtquelle von der Steuer- und Auswerteeinheit (8) eine Warnung zum Auswechseln der Lichtquelle (2) ausgegeben wird.

## Claims

1. Apparatus for determining the thickness and rate of growth of a layer of ice on components of vehicles, particularly aircraft, and on components of wind generators, in which the surface, which is to be monitored and is covered with an ice layer and/or a disruptive layer, is so illuminated that the radiation passing through the ice and/or disruptive layer is measured and analysed in different wavelength ranges, the radiation incident on the surface is split up by a holographic grating (6) connected to a line receiver (7) into so many wavelength ranges that, by comparing the measured radiation with a stored reflection curve for a surface without a coating and by combining the comparison values and the determination of the peak area in the wavelength range of the ice absorption, a measurement signal is obtained for the ice absorption, the peak area being given by the sum of the absorption values in the region of the surface influenced by the ice and the thickness of the ice and/or disruptive layer (1) and, by means of the ice thickness values obtained in the measurement intervals, the rate of growth of the ice layer (1) are determined and indicated, **characterised in that** when the measurement signal falls below a threshold value a warning is output to clean a window (3) provided in the surface covered with an ice and/or disruptive layer(1).

2. Apparatus as claimed in Claim 1, **characterised in that** the radiation passing through the window (3) is incident on the holographic grating (6) via an optical imaging system (4) and an entry gap (5) or directly through an entry gap (5).

3. Apparatus as claimed in Claim 2, **characterised in that** the radiation passing through the window (3) is incident on the holographic grating (6) via an optical imaging system (4) and an entry gap (5) and a semi-reflective mirror (10) is disposed in front of the optical imaging system (4).

4. Apparatus as claimed in one of the preceding claims, **characterised in that** a light source (2) for producing the radiation is disposed above the surface covered with an ice and/or disruptive layer (1).

5. Apparatus as claimed in one of the preceding claims, **characterised in that** a light source (2) for producing the radiation is disposed beneath the surface covered with an ice and/or disruptive layer (1).

6. Apparatus as claimed in one of the preceding claims, **characterised in that** a plurality of light sources (2) is arranged, particularly in the shape of a ring, in a base body (10) to produce the radiation.

7. Apparatus as claimed in one of the preceding claims, **characterised in that** when there is sufficient daylight, it is used as the radiation and the light source (2) is not switched on.

8. Apparatus as claimed in one of the preceding claims, **characterised in that** the analysis data may be transmitted on to a data bus system which is present.

9. Apparatus as claimed in one of the preceding claims, **characterised in that** the apparatus is constructed with the optical imaging system (4), the entry gap (5), the holographic grating (6), the line receiver (7) and the analysis unit (8) as a compact structural unit.

10. Apparatus as claimed in one of the preceding claims, **characterised in that** the measured absorption curves may be analysed by an algorithm by means of a microprocessor of a control and analysis unit (8).

11. Apparatus as claimed in one of the preceding claims, **characterised in that** the spectral analysis measurement is preferably effected in the wavelength ranges of ca. 850 to 1150 nm.

12. Apparatus as claimed in one of the preceding claims, **characterised in that** the measurement values of a surface without a coating are stored as comparative values in the control and analysis unit (8).

13. Apparatus as claimed in one of the preceding claims, **characterised in that** of all the measured values from a surface covered with an ice and/or disruptive layers, the measured values from the long wavelength end of a spectral range are not taken into account.

14. Apparatus as claimed in one of the preceding claims, **characterised in that** the ice thickness is determined in millimetres from the peak area, which is proportional to the thickness of the ice layer, by means of a conversion factor.

15. Apparatus as claimed in one of the preceding claims, **characterised in that** the rate of growth of the ice layer is determined from a relatively large number of measured ice thickness values.

16. Apparatus as claimed in one of the preceding claims, **characterised in that** when the measurement signal falls below a threshold value despite the fact that the light source is switched on, a warning is output by the control and analysis unit (8) to replace the light source (2).

## Revendications

1. Dispositif de détermination de l'épaisseur et de la vitesse de formation d'une couche de glace sur des éléments structurels de moyens de transport, en particulier des aéronefs et sur les éléments structurels des éoliennes, dans lequel
- la surface d'un élément structurel à surveiller, recouverte d'une couche de glace et/ou couche perturbatrice, est éclairée de telle sorte que le rayonnement traversant la couche de glace et/ou couche perturbatrice est mesuré et analysé dans différents domaines de longueurs d'ondes,
- au moyen d'un réseau holographique (6), relié à un récepteur de lignes (7), le rayonnement dirigé sur la surface est décomposé en des domaines de longueurs d'ondes si nombreux que l'on obtient un signal de mesure pour l'absorption de la glace à partir de la comparaison du rayonnement mesuré avec une courbe de réflexion mémorisée d'une surface sans couche de recouvrement et de la combinaison des valeurs de comparaison, ainsi que de la détermination de la surface de pic dans le domaine de longueur d'onde de l'absorption de la glace, la surface de pic étant obtenue par la somme des valeurs d'absorption dans la zone influencée par la glace sur la surface,
- l'épaisseur de la couche de glace et/ou couche perturbatrice (1) et la vitesse de formation de la couche de glace (1) sont déterminées au moyen des valeurs de l'épaisseur de glace obtenues pendant les intervalles de mesure, et sont affichées,
**caractérisé en ce que**
- en cas de franchissement en dessous d'une valeur limite du signal de mesure, il est édité un message d'alarme demandant le nettoyage d'une fenêtre (3) prévue dans la surface recouverte par une couche de glace et/ou couche perturbatrice (1).

2. Dispositif selon la revendication 1, **caractérisé en ce que** le rayonnement traversant la fenêtre (3) parvient sur le réseau holographique (6)
- en passant à travers un système optique de reproduction (4) et une fente d'admission (5) ou
- en passant directement à travers une fente d'admission (5).

3. Dispositif selon la revendication 2, **caractérisé en ce que** le rayonnement traversant la fenêtre (3) parvient sur le réseau holographique (6) en passant à travers un système optique de représentation (4) et une fente d'admission (5), et un miroir semi-transparent (10) est agencé en amont du système optique de représentation (4).

4. Dispositif selon l'une quelconque des revendications précédentes,
**caractérisé en ce qu'**une source lumineuse (2) destinée à générer le rayonnement est agencée au-dessus de la surface recouverte par une couche de glace et/ou couche perturbatrice (1).

5. Dispositif selon l'une quelconque des revendications précédentes,
**caractérisé en ce qu'**une source lumineuse (2) destinée à générer le rayonnement est agencée au-dessous de la surface recouverte par une couche de glace et/ou couche perturbatrice (1).

6. Dispositif selon l'une quelconque des revendications précédentes,
**caractérisé en ce que**, pour générer le rayonnement, il est prévu plusieurs sources lumineuses (2) agencées en particulier en cercle dans un corps de base (10).

7. Dispositif selon l'une quelconque des revendications précédentes,
**caractérisé en ce qu'**en présence d'une lumière du jour suffisante, celle-ci est utilisée comme rayonnement et la source lumineuse (2) n'est pas activée.

8. Dispositif selon l'une quelconque des revendications précédentes,
**caractérisé en ce que** les données d'analyse peuvent être transmises vers un système de bus de données prévu.

9. Dispositif selon l'une quelconque des revendications précédentes,
**caractérisé en ce que** le dispositif avec le système optique de représentation (4), la fente d'admission (5), le réseau holographique (6), le récepteur de lignes (7) et l'unité d'analyse (8) est conçue sous forme de composant compact.

10. Dispositif selon l'une quelconque des revendications précédentes,
**caractérisé en ce que** les courbes d'absorption déterminées peuvent être analysées par un algorithme au moyen d'un microprocesseur d'une unité de commande et d'analyse (8).

11. Dispositif selon l'une quelconque des revendications précédentes,
**caractérisé en ce que** la mesure analytique spectrale est effectuée de préférence dans les domaines de longueurs d'ondes d'environ 850 à 1 150 nm.

12. Dispositif selon l'une quelconque des revendications précédentes,
**caractérisé en ce que** les valeurs de mesure d'une surface sans couche de recouvrement sont mémorisées en tant que valeurs de comparaison dans l'unité de commande et d'analyse (8).

13. Dispositif selon l'une quelconque des revendications précédentes,
**caractérisé en ce que** parmi toutes les valeurs de mesure d'une surface recouverte par une couche de glace et/ou couche perturbatrice, on ne tient pas compte des valeurs de mesure de l'extrémité à onde longue d'un domaine spectral.

14. Dispositif selon l'une quelconque des revendications précédentes,
**caractérisé en ce que** l'épaisseur de glace est déterminée en millimètres au moyen d'un facteur de conversion à partir de la surface de pic qui est proportionnelle à l'épaisseur de la couche de glace.

15. Dispositif selon l'une quelconque des revendications précédentes,
**caractérisé en ce que** la vitesse de formation de la couche de glace est déterminée à partir d'un nombre relativement grand de valeurs de l'épaisseur de glace déterminées.

16. Dispositif selon l'une quelconque des revendications précédentes,
**caractérisé en ce que**, en cas de franchissement en dessous d'une valeur limite du signal de mesure malgré la connexion de la source lumineuse, l'unité de commande et d'analyse (8) émet un message d'alarme demandant le remplacement de la source lumineuse (2).
